# EUROPÄISCHE PATENTSCHRIFT

(11) **EP 2 091 798 B1**
(45) Veröffentlichungstag und Bekanntmachung des Hinweises auf die Patenterteilung: **07.12.2011**
(21) Anmeldenummer: 07821264.4
(22) Anmeldetag: 12.10.2007
(51) Int. Cl.: B60W 40/04, B60W 30/08, G08G 1/16

(54) **FAHRZEUG UND VERFAHREN ZUR BESTIMMUNG VON IN DER FAHRZEUGUMGEBUNG BEFINDLICHEN FAHRZEUGEN**
VEHICLE AND METHOD FOR IDENTIFYING VEHICLES LOCATED IN THE SURROUNDINGS OF THE VEHICLE
VEHICULE ET PROCEDE DE DETERMINATION DES VEHICULES QUI SE TROUVENT DANS L'ENVIRONNEMENT DU VEHICULE

(30) Priorität: 13.10.2006 DE 102006049100; 17.01.2007 DE 102007002569; 14.02.2007 DE 102007007283
(43) Veröffentlichungstag der Anmeldung: 26.08.2009
(73) Patentinhaber: Continental Teves AG & Co. OHG, 60488 Frankfurt (DE)
(72) Erfinder: LÜKE, Stefan, 57462 Olpe (DE)
(74) Vertreter: Bobbert, Christiana
(86) Internationale Anmeldenummer: PCT/EP2007/060897
(87) Internationale Veröffentlichungsnummer: WO 2008/043842

(56) Entgegenhaltungen:
- EP-A- 1 693 816
- DE-A1- 10 249 638
- DE-A1- 19 611 379
- GB-A- 2 358 506
- JP-A- 2006 209 681
- US-A1- 2004 078 133
- US-A1- 2005 137 756
- US-A1- 2005 216 180
- US-A1- 2006 132 602
- US-A1- 2006 162 985

## Beschreibung

Die Erfindung betrifft ein Fahrzeug und ein Verfahren zur Bestimmung von im Fahrzeugumfeld befindlichen Fahrzeugen.

Vorrichtungen und Verfahren zur Fahrdynamikregelung in einem Kraftfahrzeug sind bekannt. Beispielsweise ist dem Vortrag: International Congress and Exposition, 27.2. - 2,3.1995, Detroit, Michigan, SAE-Paper 950759, 1995 eine Vorrichtung und ein Verfahren zur Fahrdynamikregelung in einem Kraftfahrzeug beschrieben. Die Fahrdynamikregelung ist ein System, um das Kraftfahrzeug stabil und in der Spur zu halten. Dies wird durch gezieltes Bremsen einzelner Räder des Kraftfahrzeuges erreicht. Dazu werden mittels Sensoren der Fahrerwunsch, also das Sollverhalten des Kraftfahrzeuges, und das Fahrzeugverhalten, also das Ist-Verhalten des Kraftfahrzeuges, ermittelt. In einer Verarbeitungseinheit/Steuereinheit wird der Unterschied zwischen dem Soll-Verhalten und dem Ist-Verhalten als Regelabweichung ermittelt und die einzelnen Aktoren, beispielsweise die Radbremsen, mit dem Ziel der Minimierung der Regelabweichung gesteuert. Als Sensoren werden insbesondere Giergeschwindigkeitssensoren, Querbeschleunigungssensoren, Lenkradwinkelsensoren, Vordrucksensoren und Drehzahlsensoren verwendet. Hinweise auf die Verwendung wenigstens eines Bildsensorsystems bestehend aus wenigstens zwei Bildsensoren, die im wesentlichen dieselbe Szene aufnehmen, fehlen hier.

Es ist bekannt, dass zur Unterstützung des Fahrers eines Kraftfahrzeugs und zur Ansteuerung von Sicherungsmitteln Umfeldsensoren eingesetzt werden, mit denen insbesondere der Abstand zu Objekten, wie beispielsweise anderen Fahrzeugen bzw. Hindernissen bestimmt werden kann. Die Sensoren sind dabei in der Regel als Radar-, Infrarot- oder Ultraschallsensoren ausgeführt. Des Weiteren ist bekannt, dass eine Kombination von Abstandssensoren und Kamerasensoren zu einer höheren Leistungsfähigkeit bei der Objektpositionierung und Klassifizierung führen, und damit zusätzliche Funktionen wie die Fußgängererkennung ermöglichen.

Aus "Handbook of Computer Vision and Applications Volume 1-3" ist bekannt, dass 3D-Sensoren, wie Stereokameras Bild- und Positionsinformationen über Objekte ermitteln, und so weitergehende Sicherheitsfunktionen ermöglicht werden. Des Weiteren kann der zitierten Bandreihe entnommen werden, dass aus einem Mono-Kamerabild durch Algorithmen, wie Sequenzanalyse, ein Point of Interest (POI) als relevanter Bereich in einer Szene des Bildbereiches bestimmt oder die Analyse des optischen Flusses Abstände zu anderen Verkehrsteilnehmern indirekt ermittelt werden können.

Im Weiteren wird eine Vorrichtung für eine Fahrzeug zu Fahrzeug Kommunikation und/oder für die Kommunikation von zwei Fahrzeugen über eine Zentrale Infrastruktur als Telematik_einheit bezeichnet.

DE 102004022289 offenbart ein Verfahren zur Fahrdynamikregelung in einem Kraftfahrzeug. Hierbei erfasst ein Sensor einen Messwert und es wird in Abhängigkeit von dem einen Messwert ein Aktor zur Fahrdynamikregelung angesteuert. Zur Fahrdynamikregelung wird mittels eines Bildsensorsystems Bildinformationen von der Kraftfahrzeugumgebung erzeugt, wobei zwei Bildsensoren vorgesehen sind, die dieselbe Szene aufnehmen. Somit wird zur Unterstützung des Fahrers eines Kraftfahrzeugs ein Kamerasystem eingesetzt werden, um Komfortfunktionen oder Querregelfunktionen am Kraftfahrzeug durchzuführen, die kein sicheres Abstandssignal zu Objekten erfordern.

Die DE 69033962 T2 offenbart ein Verfahren und eine Vorrichtung zur Positionsbestimmung mit Satellitennavigationseinrichtungen. Diese besitzen ausreichende Genauigkeit, um mit Fahrzeug zu Fahrzeug Kommunikation oder der Kommunikation von zwei Fahrzeugen über eine Zentrale Infrastruktur eine Relativpositionierung und Relativbewegung von Fahrzeugen in der Genauigkeit zu berechnen, mit der Fahrerassistenzsysteme betrieben können.

Im Weiteren wird eine Vorrichtung für eine Fahrzeug zu Fahrzeug Kommunikation und/oder für die Kommunikation von zwei Fahrzeugen über eine Zentrale Infrastruktur als Telematikeinheit bezeichnet.

Hauptproblem hier ist aber, dass die Informationen, auf den die jeweiligen Anwendung aufbauend ihre regelungstechnischen Maßnahmen am Fahrzeug durchführen, nicht im ausreichenden Maße zuverlässig sind, da nicht sichergestellt werden kann, ob zwischen dem von der Telematikeinheit erfassten und dem eigenen Fahrzeug nicht weitere Fahrzeuge oder Objekte sich befinden. Des Weiteren ist die Genauigkeit der Satellitennavigation nicht ausreichend, um Fahrzeuge, die aus der Fahrzeug zu Fahrzeug Kommunikation mit ihrer ungefähren Position bekannt sind, in einem Kamerabild zuzuordnen, um die Daten miteinander zu fusionieren.

Die Informationen einer Mono-Kamera ohne Abstandssensor reichen in vielen Fallen für komfort oder sicherheitsfunktionen nicht aus, da der Abstand zu anderen Fahrzeugen nicht zuverlässig genug bestimmt werden kann.

Die US2004/078133A1 its als nächstliegender stand der technick nach der Oberbegriff des Anspuchs 1 zu sehen und beschreibt ein ACC-System, bei dem Daten zwischen Fahrzeugen übertragen und für die ACC-Regelung benutzt werden. Die übertragenen Daten umfassen Fahrzeugdaten wie Fahrzeugtyp, -gewicht und Reifeninformationen und Sensordaten wie Geschwindigkeit, Straßenbedingungen und Bremsfähigkeit. Anhand dieser empfangenen Daten kann ein Fahrzeug den Abstand zu einem vorausfahrenden Zielfahrzeug einstellen.

Es ist daher die Aufgabe der vorliegenden Erfindung ein Fahrzeug und ein Verfahren bereitzustellen, die eine zuverlässige Bestimmung von im Fahrzeugumfeld befindlichen Fahrzeugen ermöglichst.

Erfindungsgemäß wird diese Aufgabe durch ein Fahrzeug mit den Merkmalen des Patentanspruchs 1 und ein verfahren mit den Merkmalen des Anspruche 10 gelöst.

Die Grundidee der Erfindung liegt darin, dass durch ein Kamerasystem ermitteltes und erkanntes Fahrzeug, das dahingehend identifiziert wird, ob das gemeldete Fahrzeug das nächste objekt ist, oder ob zwischen gemeldetem Fahrzeug und dem eigenen Fahrzeug sich noch weitere Fahrzeuge befinden, um sicherzustellen, dass zwischen dem eigenen Fahrzeug und einem zweitem Fahrzeug ein freier Fahrachlauch existiert, damit im Falle von Einscheren eines seitlich einfahrenden Fahrzeug, dies zu erkannen und eine Regelung abzubrechen.

Nach der Erfindung ist es dabei vorgesehen, dass ein sendendes Fahrzeug so ausgeführt ist, dass die Telematikeinheit neben Positionsinformationen und anderen Zusatzinformationen über die Fahrzeugbewegung oder den Fahrzeugzustand übermittelt, sondern das auch (Fahrzeug) Registrierungsinformation wie z.B. das Fahrzeugkennzeichen mit übertragen wird. Gleichzeitig wird. im Fahrzeug der eingangs genannten Art das Kamerabild darauf hin ausgewertet, ob das vorausfahrende Fahrzeug vollständig sichtbar ist und ob es mit dem Registrierungskennzeichen der von der Telematikeinheit erfassten Fahrzeugs entspricht.

In diesem Fall ist davon auszugehen, dass sich keine Objekte zwischen dem eigenen Fahrzeug und dem von der Telematikeinheit erfassten Fahrzeug befinden. Ist dies der Fall, erfolgt z.B. eine ACC Regelungen und/oder Notbremsfunktionen und/oder Spurwechselwarnung und/oder andere Funktionen, die üblicherweise durch Abstandssensorik durchgeführt werden, allein auf Basis von der Telematikeinheit empfangenen und gesendeten Kommunikationsdaten, die durch die Kamera plausibilisiert werden.

In einer vorteilhaften Ausführungsform der Erfindung ist es vorgesehen, das erfindungsgemäße Verfahren durch einen zusätzlichen Objekterkennungsalgorithmus zu erweitern, der das Einscheren bereits vor Verdeckung des Zielfahrzeugs erkennt und die Funktionalität der Fahrerassistenzsysteme abschaltet.

Gemäß einer besonders vorteilhaften Ausführungsform der Erfindung ist weiterhin vorgesehen, die Absolutpositionierung der Telematikeinheit durch die Querpositionsierung der Kamera zu verbessern. In diesem Fall erfolgt eine so genannte Fusion der Informationen der Kamera und der Fahrzeug zu Fahrzeugkommunikation.

Basierend auf den oben genannten Ausführungsform, die Kamera mit der Fahrzeug zu Fahrzeug Kommunikation zu kombinieren, läßt sich gegenüber sendenden Fahrzeugen die Regelungsverfahren für ein ACC-Systems vorteilhaft erweitern. Es können so genannte "höherwertige" Verfahren, wie z.B. die bekannte ACC Stopp&Go in einfacher Form realisieren. Basierend auf dieser Erkennung werden bei drohenden Unfallsituationen alle mit APIA (Active Passive Integration Approach) bezeichneten Funktionalitäten zur Ansteuerung von passiven und aktiven Sicherheitsmaßnahmen einschließlich einer Spurwechselassistenz angesprochen. Unter APIA ist die Vernetzung aktiver und passiver Sicherheitssysteme sowie der Integration von Umfeldsensorik zu verstehen, um möglichst unfall- und verletzungsvermeidende Fahrzeuge herzustellen. Die Unfallwahrscheinlichkeit wird beispielsweise in einem Gefahrenrechner für die aktuelle Verkehrssituation ermittelt und es werden gestufte Maßnahmen zum Schutz der Insassen und anderer Verkehrsteilnehmer eingeleitet.

In einer weiteren vorteilhaften Ausführungsform der Erfindung ist es vorgesehen, Satellitennavigationsinformationen durch Zuordnung der Relativgeschwindigkeiten, der relativen Beschleunigung oder anderer Daten die Leistungsfähigkeit von Assistenzsystemen zu verbessern, die bereits über Abstandsinformationen verminderter Güte verfügen.

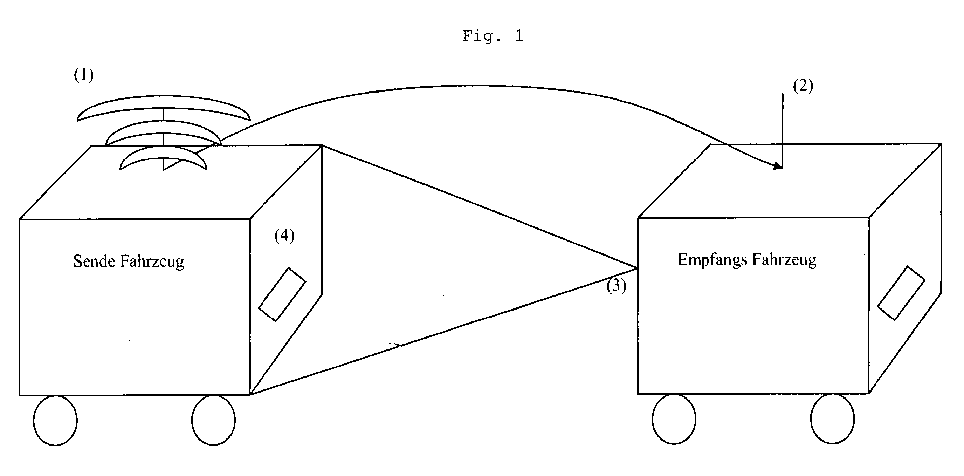

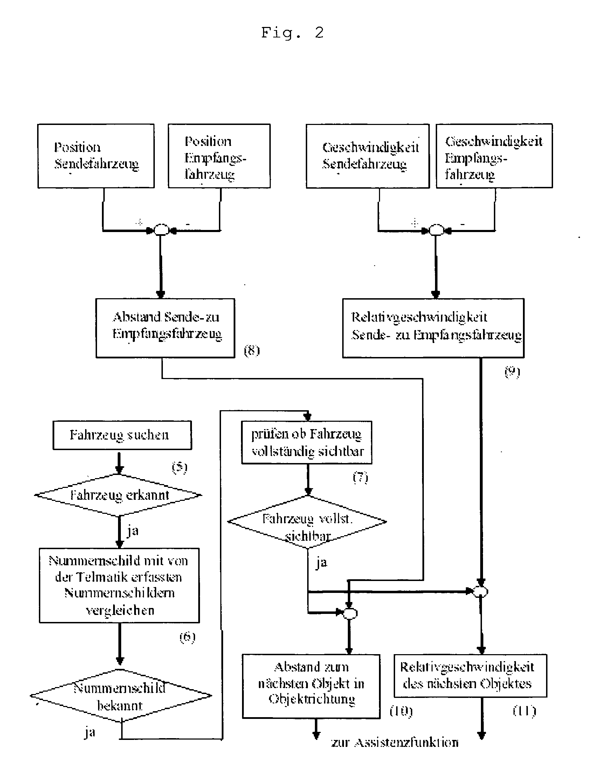

Weitere Vorteile, Besonderheiten und zweckmäßige Weiterbildungen der Erfindung ergeben sich aus den Ausführungsbeispielen, die nachfolgend anhand der Figur 1 und 2 beschrieben werden.

Ein Ausführungsbeispiel der Erfindung wird in den Zeichnung dargestellt und wird im Folgenden näher beschrieben.

Es zeigen
Fig. 1 Eine Fahrzeugerkennung mittels einer zur Umfelderfassung ausgeführten Kamera und einer eine für den Empfang und für das Senden der Registrierungsinformation ausgeführte Telematikeinheit
Fig. 2 Erfindungsgemäßen Ablauf zur Generierung einer Abstands- und Relativgeschwindigkeitsinformation für Fahrerassistenzsysteme

Fig. 1 zeigt dabei eine schematische Darstellung Fahrzeugerkennung mittels eines Umfeldererfassungssystem das als eine Kamera ausgeführt ist und für das Senden und Empfangen von Registrierungsinformationen eine Telematikeinheit aufweißt. Das erste Fahrzeug (1) sendet die eigene aktuelle Position, die Registrierungsinformation und weitere Informationen wie z.B. Fahrzeuggeschwindigkeit, Bremssignal oder ähnliches aus.

Wie in den Anmeldungen DE 102006029096.8 und DE 102006023339.5 der Patentanmelderin angegeben können ein in dieser Erfindung genutzten Informationen mittels der in den beiden Anmeldungen beschriebenen Verfahren durchgeführt werden. Der Inhalt dieser beiden genannten Anmeldungen ist Bestandteil der vorliegenden Anmeldung.

Das empfangende Fahrzeug (2) empfängt diese Daten. Gleichzeitig ermittelt bzw. sucht das Fahrzeug im unmittelbaren Bereich mittels der Kamera (3) nach Fahrzeugen und falls ein Fahrzeug erkannt wurde, wird das Kennzeichen (4) ermittelt und gelesen. Es wird weiterhin geprüft, ob die Rückfront des Fahrzeugs vollständig sichtbar ist.

Bei der Suche nach weiteren im Umfeld befindlichen Fahrzeugen Fahrzeugen wird bei vorteilhaft eine Videoüberwachungsmethode, die wie z.B. die Schrifterkennung (OCR) nutzt, um Kennzeichen von Fahrzeugen zu erkennen, eingesetzt. Hierdurch kann ein Fahrzeug bei einer Fahrgeschwindigkeit von bis zu 160 km/h erfasst werden. Erfindungsgemäß werden entweder bestehende Mono-Videoüberwachungskameras, Kameras in Radargeräten oder speziell dafür entwickelte Kamera-Kompaktgeräte verwendet, die in verschieden Frequenzspektren eingesetzt werden. Es ist erfindungsgemäß angedacht, das Kamerasysteme mit automatischen Geschwindigkeits- und Abstandsmessungen für die Abstandsregelung für Fahrerassistenzsystem interagiert. Der Verfahrensschritt "Fahrzeug suchen" (5) ist so ausgelegt, das nach Farbe, Form und grafischem Aufbau unterschiedlicher Arten von Fahrzeugkennzeichen gesucht und erkannt werden können. Bei der Suche unter eingeschränkten Lichtverhältnissen wird vorzugsweise infrarotes Licht eingesetzt, um unabhängig von der Tageszeit und somit von den Lichtverhältnissen eine visuelle Erfassung der Umgebung durchzuführen.

Zuerst wird bei der Ermittlung der im Umfeld befindlichen Fahrzeuge der relevante Bildbereich (POI) festgelegt. Als relevanter Bildbereich wird beispielsweise die Registrierungsinformation in Form des Fahrzeugkennzeichens selektiert und segmentiert, dieser Bereich wird visuell erfasst, optisch normalisiert, qualitativ verbessert und anschließend einer Schriftzeichenerkennung durchgeführt, um den alphanumerischen Text zu erhalten.

Dies wird in Echtzeit pro erkannte Fahrspur durchgeführt. Diese Informationen können automatisiert übertragen und/oder zur späteren Weiterverarbeitung gespeichert werden. Des weiteren ist es erfindungsgemäß angedacht, dass sowohl die durch die Kamera erfassten einzelnen Bilder und/oder Sequenzen als auch der erkannte Text auf einem im Fahrzeug fest eingebauten oder mobilen Datenträger gespeichert werden. Die Speicherung erfolgt mittels einer Datenübertragung über einen im Fahrzeug befindlichen Datenbus, wie z.B. dem CAN Bus, und/oder mittels mobiler Datenübertragung, wie z.B. Bluetooth.

Fig. 2 zeigt dann die Verarbeitungsschritte des Systems im Empfangsfahrzeug. Im Schritt (5) wird zunächst nach Fahrzeugen im Erfassungsbereich der Kamera gesucht. Werden Fahrzeuge erkannt, wird in Schritt (6) deren Kennzeichen gelesen und mit dem durch die Telematikeinheit erfassten Fahrzeuge mittels eines Ähnlichkeitsmaßes verglichen. Passt ein Kennzeichen zu einem Fahrzeug, wird in Schritt (7) überprüft, ob weitere Objekte vor dem Fahrzeug sichtbar sind.

Ist keine eindeutige Erkennung möglich, wenn beispielsweise andere Fahrzeuge oder an den betreffeden Fahrzeugen angebrachten Anhängerkupplungen, Abschleppstangen oder ähnliche Objekte, die die Sicht auf ein oder zwei Zeichen der Kennzeichen verdecken, wird erfindungsgemäß keine Information, die über die Kamera ermittelt wird, zur Plausibilisierung herangezogen.

Falls eine eindeutige Erkennung möglich ist, werden die in Schritt (8) und (9) erfassten Daten als Sensordaten (10) den Fahrerassistenzsystemen zur Verfügung gestellt werden. Bei diesem Ausführungsbeispiel können keine geringfügigen Fehler akzeptiert werden. Wird ein Umfelderfassungssystem verwendet so kann die Fehl- oder Nichterkennung eines einzelnen Zeichens nicht toleriert werden. Es ist sicherzustellen, da eine korrekte Erkennung des gesamten Kennzeichens erfolgt, da dies die Voraussetzung für ein Funktionieren der Gesamtsystemarchitektur ist.

Es können weitergehenden Verfahrenschritte auf die selektierten und segmentierten Bildbereiche angewendet werden, um den Text auf den Kennzeichen zu erkennen. Der selektierte Bildbereich wird zuerst auf einen einheitlichen Kontrast und Helligkeit gebracht (Normalisierung) und danach für die OCR segmentiert. Danach erfolgen eine Lokalisierung des Kennzeichens sowie eine Erkennung der Position des Nummernschildes im Bildbereich. Anschließend wird die Orientierung der einzelnen Elemente der Fahrzeugkennzeichen bestimmt, wie. z.B. die Größe, die Unterschiede in der räumlichen Lage und der Größe des vollständigen Fahrzeugkennzeichens. Bei der Zeichensegmentierung werden die einzelnen Elemente des Fahrzeugkennzeichens ermittelt und identifiziert. Somit wird eine alphanumerischen Zeichenerkennung durchgeführt.

Die Qualität jeder einzelnen Stufe beeinflusst die Genauigkeit des Gesamtsystems. Hierzu können insbesondere Filter benutzt werden, um optische Störungen zu kompensieren.

Viele Länder benutzen retroreflektive Kennzeichen. Diese reflektieren das Licht in die Richtung der Quelle zurück, wodurch sich ein besserer Kontrast ergibt. Auch werden oft nicht-reflektierende Zeichen eingesetzt, was auch unter schlechten Lichtbedingungen den Kontrast erhöht. Infrarot-Kameras eignen sich ebenfalls gut für den Einsatz in solchen Systemen, in Verbindung mit einem Infrarot-Strahler und einem Normallicht-Filter vor der Kamera.

Unscharfe Bilder erschweren die Zeichenerkennung. Es können vorteilhaft daher Kameras mit einer sehr kurzen Belichtungszeit eingesetzt werden, um die Bewegungsunschärfe zu minimieren. Vorzugsweise beträgt die Belichtungszeit 1/1000 Sekunde. Wird die Kamera sehr niedrig montiert oder bewegt sich der Verkehr langsamer, kann diese Zeit auch länger ausgelegt ewrden.

Bei der zweiten Ausführungsform ermöglicht die Einbettung von RFID-Tags in z.B. das Fahrzeugkennzeichen die Erkennung der Registrierungsinformationen. Die Kennzeichen sind so gestaltet dass ein Entfernen nicht zerstörungsfrei möglich ist. Diese RFID-Tags sind mit Batterien ausgestattet, so dass sie ihre Kennung, die auch das eigentlichen Kennzeichen des Fahrzeugs umfasst, nach der Aktivierung für mindestens 10 Jahre kontinuierlich selbst funken. Im Gegensatz zu passiven RFID-Systemen mit Reichweiten von nur wenigen Metern ist die Kennung dadurch bis in eine Entfernung von rund 100 Metern mit entsprechenden mobilen angebrachten Sensoren lesbar. Die Funkkennung ist verschlüsselt und auslesbar und eindeutig identifizierbar.

Bei dieser Ausführungsform werden somit anstelle der visuellen Erfassung, die Signale der RFID-Tags ausgewertet. Die zugehörigen Lesegeräte, die in der Telematikeinheit integriert sind ermöglichen bis zu 200 Kennungen gleichzeitig auslesen können, auch von Fahrzeugen, die sich mit hohen Geschwindigkeiten vorbeibewegen.

In einer dritten Ausführungsform wird das Registrierungskennzeichen codiert über die Leuchtmittel am Heck des Fahrzeuges ausgegeben. Hierbei können die Leuchtmittel durch ihre Blinkfrequenz und ihre Helligkeit die codierte Registrierungsinformation wiedergeben. Vorteilhaft sind hierbei LED-Leuchten, wobei auch herkömmliche Leuchtmittel eingesetzt werden können. Das Kamerasystem erkennt die codierten (Licht)Signale und plausibiliert diese dann gegenüber der über die Telematikeinheit empfangenen Registrierungsinformation.

In einer vierten Ausführungsform werden die drei beschrieben Arten in der Art miteinander kombiniert, dass mittels des Kamerasystems die visuelle erkennbare Registrierungsinformation, die von RFID-Tag ausgesendete Registrierungsinformation und die (Licht)Signale am Heck des vorausfahrenden Fahrzeuges mittels der Telematikeinheit und des Kamerasystems ausgewertet. Bei Übereinstimmung aller drei Informationen liegt eine eindeutige Identifikation vor. Bei Vorliegen einer Differenz kann über die Telematikeinheit eine Benachrichtigung an den Fahrer ausgegeben werden, das keine Indentifikation möglich ist. Ein möglich Grund ist z.B. das gestohlene Kennzeichen an einem Fahrzeug angebracht sind und hier zwei verschiede Registrierungskennzeichen vorliegen. Über die Telematikeinheit kann eine Benachrichtigung an relevante Sicherheitsbehörden erfolgen.

## Patentansprüche

1. Fahrzeug mit einem Umfelderfassungssystem, das Umfeldinformationen einer Regel- und Steuereinheit des Fahrzeugs zur Verfügung stellt und eine Regelung bzw. Steuerung das Fahrverhalten in Abhängigkeit von den erfassten Umfeldinformationen verändert,
**dadurch gekennzeichnet,**
**dass** das Fahrzeug ein Registrierungsinfosystem aufweist, das eine Registrierungsinformation von im Umfeld befindlichen Fahrzeugen empfängt, wobei die Registrierungsinformation das Fahrzeugkennzeichen ist, und dass das Registrierungsinfosystem die empfangene Registrierungsinformation mit der von einem Umfelderfassungssystem erfassten Registrierungsinformation vergleicht und in Abhängigkeit von dem Vergleichsergebnis die Regelung bzw. Steuerung verändert.

2. Fahrzeug nach Anspruch 1,
**dadurch gekennzeichnet,**
**dass** abhängig vom Vergleichsergebnis eine Positions- und Geschwindigkeitsbestimmung der im Umfeld befindlichen Fahrzeuge erfolgt.

3. Fahrzeug nach Anspruch 1 oder Anspruch 2,
**dadurch gekennzeichnet,**
**dass** aus der Position der im Umfeld befindlichen Fahrzeuge und der Position des Fahrzeugs Abstände errechnet werden.

4. Fahrzeug nach einem der vorangegangen Ansprüche
**dadurch gekennzeichnet,**
**dass** aus der Geschwindigkeit der im Umfeld befindlichen Fahrzeuge und der Geschwindigkeit des Fahrzeugs selbst eine Relativgeschwindigkeit errechnet wird.

5. Fahrzeug nach einem der vorangegangenen Ansprüche,
**dadurch gekennzeichnet,**
**dass** auf empfangenen Positionsinformationen basierend und optional der Relativgeschwindigkeit eine ACC Regelung durchgeführt wird.

6. Fahrzeug nach einem der vorangegangenen Ansprüche,
**dadurch gekennzeichnet,**
**dass** auf empfangenen Positionsinformationen basierend und optional der Relativgeschwindigkeit passive und/oder aktive Sicherheitsmaßnahmen aktiviert werden.

7. Fahrzeug nach einem der vorangegangenen Ansprüche,
**dadurch gekennzeichnet,**
**dass** auf den empfangenen Positionsinformationen und der Relativgeschwindigkeit aufbauend eine Spurwechselwamung erfolgt.

8. Fahrzeug nach einem der vorangegangenen Ansprüche,
**dadurch gekennzeichnet,**
**dass** auf empfangenen Positionsinformationen basierend und optional der Relativgeschwindigkeit eine Spurwechsetwarnung erfolgt.

9. Fahrzeug nach einem der vorangegangenen Ansprüche,
**dadurch gekennzeichnet,**
die vom Fahrzeug empfangene Registrierungsinformation im Unicast und/oder Multicast und/oder Broadcast Mode von den im Umfeld befindlichen Fahrzeugen ausgesendet wird.

10. Verfahren zur Erfassung von Objekten im Umfeld von Fahrzeug, wobei die Verfahrensschritte
a. Aussenden einer fahrzeugeigenen Registrierungsinformation
b. Empfang der Registrierungsinformation eines im Umfeld befindlichen Fahrzeugs
c. Visuelle Erfassung der benachbarten Fahrzeuge in einem Bildbereich
d. Festlegung eines relevanten Bildbereich
e. Extraktion eines relevanten Bildbereich durchgeführt werden,
**dadurch gekennzeichnet,**
**dass** nach dem Empfang der Registrierungsinformation eine Extraktion eines relevanten Bildbereichs in Echtzeit efrolgt und die empfangene Registrierungsinformation mittels eines Ähnlichkeitsmaßes mit dem extrahierten Bildbereich verglichen wird.

11. Verfahren nach Anspruch 10,
**dadurch gekennzeichnet,**
**dass** der relevante Bildbereich die Registrierungsinformation des sendenden Fahrzeugs umfasst und der extrahierte Bildbereich die Registrierungsinformation ist.

12. Verfahren nach Anspruch 10,
**dadurch gekennzeichnet,**
**dass** die Registrierungsinformation das Fahrzeugkennzeichen ist.

## Claims

1. Vehicle having an environment detection system which provides environment-related information to an automatic control unit of the vehicle and modifies a control of the driving behavior as a function of the detected environment-related information,
**characterized in that**
the vehicle has a registration info system which receives registration information from vehicles within the surrounding environment, wherein the registration information is the license plate number, and the registration info system compares the received registration information with the registration information received from an environment detection system and modifies the control as a function of the result of the comparison.

2. Vehicle according to claim 1,
**characterized in that**
depending on the result of the comparison a position and velocity determination of the vehicles within the surrounding environment takes place.

3. Vehicle according to claim 1 or claim 2,
**characterized in that**
distances are calculated from the position of the vehicles within the surrounding environment and the position of the vehicle.

4. Vehicle according to any one of the preceding claims,
**characterized in that**
a relative velocity is calculated from the velocity of the vehicles within the surrounding environment and the velocity of the vehicle itself.

5. Vehicle according to any one of the preceding claims,
**characterized in that**
an ACC is performed based on received position information and optionally the relative velocity.

6. Vehicle according to any one of the preceding claims,
**characterized in that**
passive and/or active safety measures are activated based on received position information and optionally the relative velocity.

7. Vehicle according to any one of the preceding claims,
**characterized in that**
a lane change warning is given on the basis of the received position information and the relative velocity.

8. 3Vehicle according to any one of the preceding claims,
**characterized in that**
a lane change warning is given based on received position information and optionally the relative velocity.

9. Vehicle according to any one of the preceding claims,
**characterized in that**
the registration information received by the vehicle is emitted from the vehicles within the surrounding environment in unicast and/or multicast and/or broadcast mode.

10. Method for detecting objects in the surrounding environment of a vehicle, wherein the steps of
a. emitting a registration information by the vehicle itself
b. reception of the registration information of a vehicle within the surrounding environment
c. visual detection of the neighboring vehicles in an image region
d. determination of a relevant image region
e. extraction of a relevant image region are performed,
**characterized in that**
after reception of the registration information an extraction of a relevant image region is done in real-time and the received registration information is compared with the extracted image region by means of a similarity measure.

11. Method according to claim 10,
**characterized in that**
the relevant image region comprises the registration information of the transmitting vehicle and the extracted image region is the registration information.

12. Method according to claim 10,
**characterized in that**
the registration information is the license plate number.

## Revendications

1. Véhicule avec un système de détection de l'environnement qui met des informations d'environnement à la disposition d'une unité de régulation et de commande du véhicule et une régulation ou une commande qui modifie le comportement de conduite en fonction des informations d'environnement détectées,
**caractérisé en ce que**
le véhicule présente un système d'informations enregistrées qui reçoit une information enregistrée en provenance de véhicules situés dans l'environnement, l'information enregistrée étant un numéro minéralogique du véhicule, et **en ce que** le système d'informations enregistrées compare l'information enregistrée reçue à l'information enregistrée détectée par un système de détection de l'environnement et modifie la régulation ou la commande en fonction du résultat de la comparaison.

2. Véhicule selon la revendication 1,
**caractérisé en ce que**,
en fonction du résultat de la comparaison, il est effectué une détermination, de position et de vitesse des véhicules situés dans l'environnement.

3. Véhicule selon la revendication 1 ou la revendication 2,
**caractérisé en ce que**,
à partir de la position des véhicules situés dans l'environnement et de la position du véhicule, des intervalles sont calculés.

4. Véhicule selon une des revendications précédentes,
**caractérisé en ce que**,
à partir de la vitesse des véhicules situés dans l'environnement et de la vitesse du véhicule lui-même, une vitesse relative est calculée.

5. Véhicule selon une des revendications précédentes,
**caractérisé en ce**
**qu'**une régulation ACC est réalisée sur la base d'informations de position reçues et, optionnellement, de la vitesse relative.

6. Véhicule selon une des revendications précédentes,
**caractérisé en ce que**
des mesures de sécurité passives et/ou actives sont activées sur la base d'informations de position reçues et, optionnellement, de la vitesse relative.

7. Véhicule selon une des revendications précédentes,
**caractérisé en ce**
**qu'**un avertissement de changement de voie intervient, fondé sur les informations de position reçues et sur la vitesse relative.

8. Véhicule selon une des revendications précédentes,
**caractérisé en ce**
**qu'**un avertissement de changement de voie intervient sur la base d'informations de position reçues et, optionnellement, de la vitesse relative.

9. Véhicule selon une des revendications précédentes,
**caractérisé en ce que**
l'information enregistrée reçue par le véhicule est émise par les véhicules situés dans l'environnement dans le mode Unicast et/ou Multicast et/ou Broadcast.

10. Procédé de détection d'objets dans l'environnement du véhicule, avec réalisation des étapes de procédé suivantes :
a. envoi d'une information enregistrée propre au véhicule
b. réception de l'information enregistrée d'un véhicule situé dans l'environnement
c. détection visuelle des véhicules voisins dans une zone d'image
d. détermination d'une zone d'image pertinente
e. extraction d'une zone d'image pertinente,
**caractérisé en ce que**,
après la réception de l'information enregistrée, il intervient une extraction d'une zone d'image pertinente en temps réel, et **en ce que** l'information enregistrée reçue est comparée, au moyen d'une mesure de similarité, à la zone d'image extraite.

11. Procédé selon la revendication 10,
**caractérisé en ce que**
la zone d'image pertinente comprend l'information enregistrée du véhicule émetteur, et **en ce que** la zone d'image extraite est l'information enregistrée.

12. Procédé selon la revendication 10,
**caractérisé en ce que**
l'information enregistrée est le numéro minéralogique du véhicule.
